# FASCICULE DE BREVET EUROPEEN

(11) **EP 3 455 113 B1**
(45) Date de publication et mention de la délivrance du brevet: **09.09.2020**
(21) Numéro de dépôt: 17730837.6
(22) Date de dépôt: 09.05.2017
(51) Int. Cl.: B60V 1/04, B60V 1/18, B60V 1/12

(54) **VÉHICULE À SUSTENTATION PAR AIR**
DURCH LUFT UNTERSTÜTZTES FAHRZEUG
VEHICLE SUPPORTED BY AIR

(30) Priorité: 10.05.2016 FR 1654170
(43) Date de publication de la demande: 20.03.2019
(73) Titulaire: Dufour, Charles, Blaise, 34090 MONTPELLIER (FR)
(72) Inventeur: Dufour, Charles, Blaise, 34090 MONTPELLIER (FR)
(74) Mandataire: Delaveau, Sophie
(86) Numéro de dépôt international: PCT/FR2017/051102
(87) Numéro de publication internationale: WO 2017/194870

(56) Documents cités:
- FR-A- 1 170 380
- FR-A- 1 265 571
- FR-A1- 2 112 038
- FR-A1- 2 955 831
- US-A- 3 342 278
- US-A- 4 413 697

## Description

L'invention concerne principalement un véhicule à sustentation par air, tel qu'un aéroglisseur, un hovercraft ou un aérodyne.

Ce type de véhicule utilise une ou plusieurs turbines à air pour le soulever du sol et pour le faire avancer.

Les véhicules existants sont consommateurs en énergie. Pour limiter cette consommation, il a déjà été proposé d'améliorer l'aérodynamique du véhicule. On peut citer, par exemple, le document US 3 077 321 qui décrit un aéroglisseur dont le profilé extérieur global est celui d'une aile afin de générer un « effet de sol ». L'aéroglisseur cité dans ce document comprend un plancher creux, muni d'un canal central 130 équipé d'une fente de sortie réduite par rapport au canal et permettant de stabiliser l'aéroglisseur.

Ce dernier comprend également un conduit d'air en position avant, terminé par des buses agencées pour conduire l'air vers les plaques orientables de manière à ce que l'air soit dirigé vers l'avant et le long de la surface extérieure de l'aéroglisseur.

On connait également des aéroglisseurs comprenant des ailes extérieures montées pivotantes sur un axe horizontal, permettant d'améliorer la sustentation et d'orienter l'aéroglisseur. On peut citer, par exemple, le document US 4 899 954 ou le document US 5 267 626. Cependant, ce type d'aéroglisseur se rapproche beaucoup plus de l'avion qui utilise des ailes extérieures pour assurer sa sustentation. Ils sont encombrants et fragiles car les ailes peuvent être facilement endommagées. En outre, on connaît le document US 4 413 697 qui est considéré comme l'art antérieur le plus proche et décrit les caractéristiques du préambule de la revendication 1.

L'invention vise ainsi à proposer un véhicule à sustentation par air économe en énergie, peu encombrant et stable.

À cet effet, le véhicule à sustentation par air, comprenant une cabine et une turbine d'aspiration et de distribution d'air pour assurer, en utilisation, la sustentation et l'orientation du véhicule au-dessus d'un sol, est essentiellement caractérisé en ce qu'il comprend, en outre, une semelle dite « de sustentation », agencée sous le véhicule en position d'utilisation, la semelle de sustentation étant constituée d'un cadre périphérique d'épaisseur déterminée et d'une ouverture centrale s'ouvrant au-dessus du sol, et comprenant un moyen de support d'une aile dite « de sustentation » montée pivotante sur un axe horizontal et transversal par rapport à la position d'utilisation du véhicule et au-dessus de l'ouverture centrale de la semelle de sustentation.

Le véhicule à sustentation par air peut également comporter les caractéristiques optionnelles suivantes considérées isolément ou selon toutes les combinaisons techniques possibles :
- le moyen de support de l'aile de sustentation est un arceau fixé au-dessus de l'ouverture centrale de la semelle, l'aile étant montée dans l'arceau.
- des bords du cadre délimitant l'ouverture centrale de la semelle de sustentation comprennent une portion biseautée s'élargissant vers le bas du véhicule en position d'utilisation.
- le véhicule comporte en outre un fuselage au-dessus de l'arceau, définissant un tunnel longitudinal au-dessus de l'ouverture centrale de la semelle de sustentation, le tunnel ayant une entrée d'air de section déterminée et munie de la turbine, et une sortie d'air de section inférieure à la section de l'entrée, l'arceau et l'aile étant agencés entre l'entrée et la sortie du tunnel.
- la turbine présente un axe de rotation dirigé vers l'aile de sustentation et formant un angle α avec une direction horizontale et longitudinale par rapport à la position d'utilisation du véhicule.
- la turbine comprend deux hélices contrarotatives et coaxiales.
- le véhicule comprend un déflecteur disposé transversalement dans le fuselage et présentant une surface convexe permettant de diriger l'air pulsé par la turbine vers l'aile de sustentation.
- le tunnel comprend une portion centrale ayant une section régulièrement décroissante depuis l'entrée vers la sortie du tunnel.
- le véhicule comprend en outre un sélecteur automatique de positions de l'aile de sustentation, le sélecteur étant programmé pour orienter la dite aile selon un angle compris entre 12 et 16 degrés par rapport à l'horizontale, en position d'utilisation.
- le véhicule comprend en outre une jupe souple périphérique autour de la semelle de sustentation.
- la semelle définit au moins une zone confinée d'accumulation d'air conformée symétriquement à l'axe longitudinal du véhicule et délimitée par le sol et la face inférieure de la semelle en regard du sol, le véhicule comprenant des moyens d'amenée d'au moins une partie du flux d'air généré par la turbine vers la ou les zones d'accumulation de sorte que l'augmentation de la pression d'air résultant de l'accumulation d'air dans la zone correspondante améliore la sustentation de la semelle.
- le cadre périphérique formant la semelle comprend deux parties longitudinales, chacune comprenant un évidement interne longitudinal formant une conduite d'air s'étendant depuis un orifice d'entrée d'air qui est formé dans la paroi de bord de la semelle et qui est en liaison avec une canalisation d'arrivée d'air qui débouche à proximité de la turbine, jusqu'à au moins un trou d'évacuation d'air qui est formé dans la paroi inférieure en regard du sol de la conduite d'air correspondante et qui débouche vers la zone confinée dédiée qui est ménagée entre ladite paroi inférieure de la semelle et le sol.
- chaque partie longitudinale comprend la conduite d'air correspondante et une partie pleine adjacente à la conduite d'air, et en ce que la face inférieure de la conduite d'air est inclinée en s'éloignant du sol depuis l'intérieur du cadre en appui sur le sol vers la partie pleine également en appui sur le sol de manière à délimiter la zone confinée d'accumulation d'air par le sol, la partie pleine et la face inférieure de la conduite d'air.
- chaque conduite d'air définit une pluralité de zones confinées ou une zone confinée unique.
- l'aile comprend un volet d'extrémité monté pivotant et dont l'orientation par rapport à l'aile peut être réglée par l'intermédiaire d'un actionneur afin de modifier la portance de l'aile.

D'autres caractéristiques et avantages de l'invention ressortiront clairement de la description qui en est donnée ci-dessous, à titre indicatif et nullement limitatif, en référence aux figures annexées parmi lesquelles :
- la figure 1, est une vue schématique de dessus d'une semelle de sustentation d'un aéroglisseur selon l'invention ;
- la figure 2, est une vue schématique en coupe longitudinale de la semelle de sustentation de la figure 1 ;
- la figure 3, est une vue schématique en coupe transversale de la semelle de sustentation de la figure 1 ;
- la figure 4, est une vue schématique en perspective d'une semelle de sustentation d'un aéroglisseur selon l'invention munie d'une aile de sustentation ;
- la figure 5, est une vue schématique en coupe transversale de la semelle de sustentation de la figure 4 ;
- la figure 6, est une vue schématique vue de côté de la fixation de l'aile de sustentation de la figure 4 ;
- la figure 7, est une vue schématique en coupe longitudinale d'une chambre de compression et de propulsion d'air d'un aéroglisseur selon l'invention ;
- la figure 8, est une vue schématique en coupe longitudinale d'une semelle de sustentation dans un second mode de réalisation de l'invention ;
- la figure 9, est une vue partielle de la figure 8 représentant un déflecteur et l'aile de sustentation dans ce second mode de réalisation ;
- la figure 10 représente une vue en perspective de la semelle et du déflecteur du second mode de réalisation ; et
- la figure 11, est une vue en section transversale selon la flèche XI d'une partie longitudinale du cadre formant la semelle de sustentation de la figure 10.

Un véhicule à sustentation par air selon l'invention comprend une cabine (non illustrée) dans laquelle se trouve le poste de pilotage, et au moins une turbine 160 d'aspiration et de distribution d'air pour assurer, en utilisation, la sustentation et l'orientation du véhicule au-dessus d'un sol S.

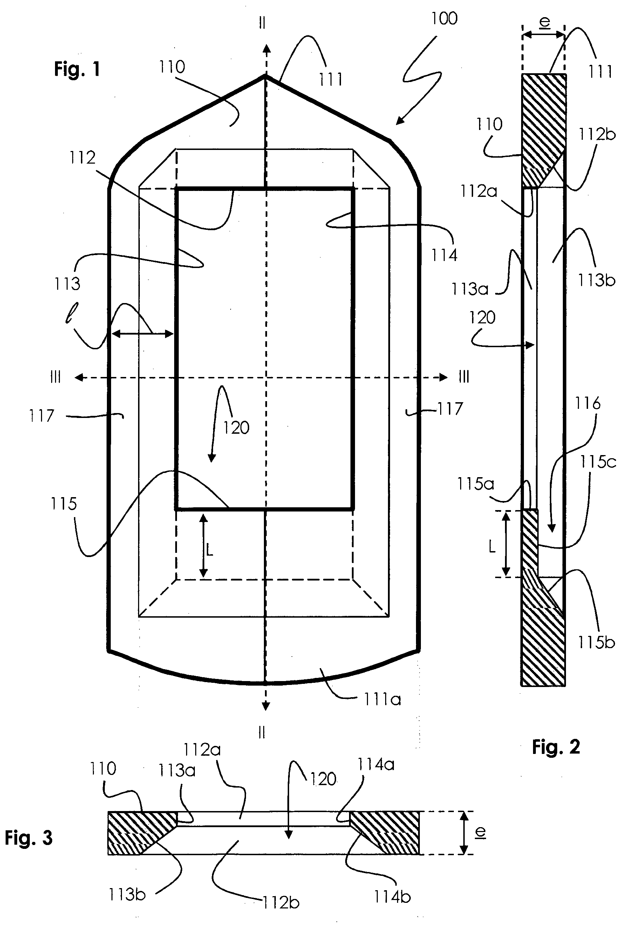

Selon l'invention, le véhicule comporte en partie inférieure, par rapport à la position d'utilisation, la semelle 100 dite « de sustentation » illustrée en figures 1 à 3 et 10 à 11.

Cette semelle 100 est en outre constituée d'un cadre périphérique 110, d'épaisseur e déterminée et d'une ouverture centrale 120 s'ouvrant au-dessus du sol S.

Le cadre 110 peut être monobloc ou constitué de plusieurs pièces fixées les unes aux autres. Le cadre 110 est donc défini par deux parties longitudinales 117 et deux parties transversales respectivement avant 111 et arrière 111a par rapport à la position d'utilisation du véhicule. Dans la suite de la description, les termes avant et arrière seront toujours considérés par rapport à la position d'utilisation du véhicule.

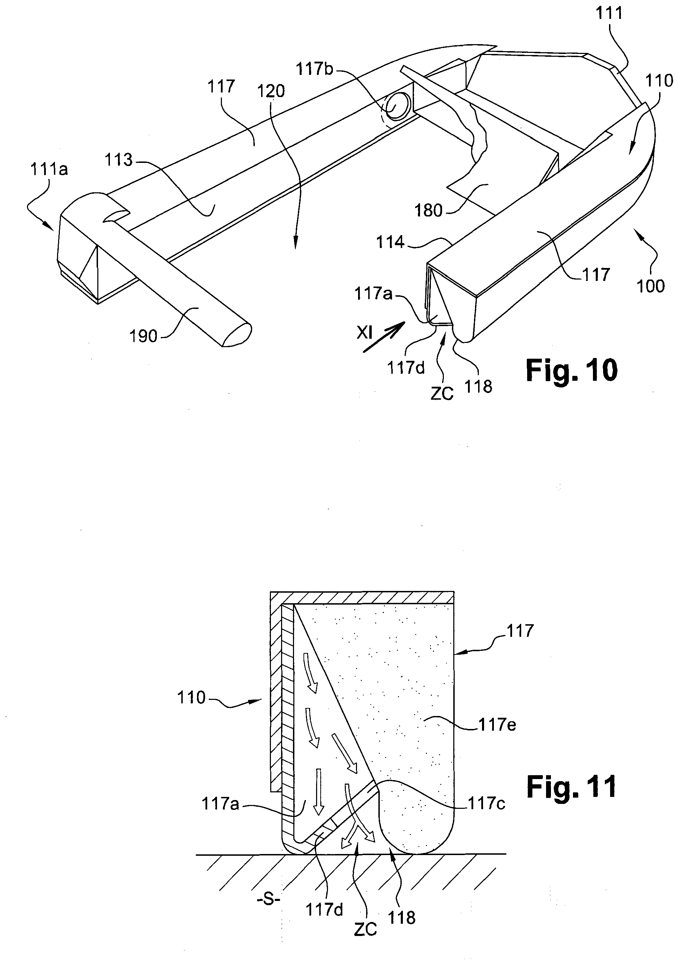

La forme en plan du cadre 110, illustrée à titre d'exemple aux figures 1 à 3 et 10, a sa partie transversale avant 111 effilée vers l'avant, en position d'utilisation du véhicule. Comme représenté figure 10, la semelle 100 peut comprendre une barre transversale 190 de renfort de la partie transversale arrière 111a, afin de stabiliser cette partie arrière 111a lors du déplacement du véhicule.

En référence à la figure 2, le cadre présente une largeur l suffisante pour pouvoir y fixer la cabine et les autres parties du véhicule, non illustrées sur cette figure.

Lorsque le véhicule est à l'arrêt, la semelle de sustentation 100 sert de socle au véhicule. Pour cette raison, la semelle est réalisée dans un matériau résistant à l'écrasement sous le poids du véhicule et de ses passagers. Ce matériau est en outre préférentiellement peu dense, et est par exemple de la mousse alvéolée à mémoire de forme.

En utilisation, la semelle de sustentation 100 permet de concentrer l'air expulsé par la turbine 160 et de la diriger efficacement vers le sol S. Elle permet donc au véhicule de se soulever et d'avancer de manière plus efficace qu'un véhicule dépourvu d'une telle semelle.

En référence à la figure 1, en partie arrière de l'ouverture centrale 120, le bord arrière 115 peut avantageusement se prolonger horizontalement sous le cadre sur une longueur L déterminée avant la portion biseautée 115b. Autrement dit, le bord arrière 115 comprend, entre la portion verticale 115a et la portion biseautée 115b, une portion horizontale 115c s'étendant sous la semelle 100.

Cela délimite ainsi un zone creuse 116, située à l'arrière de l'ouverture centrale 120.

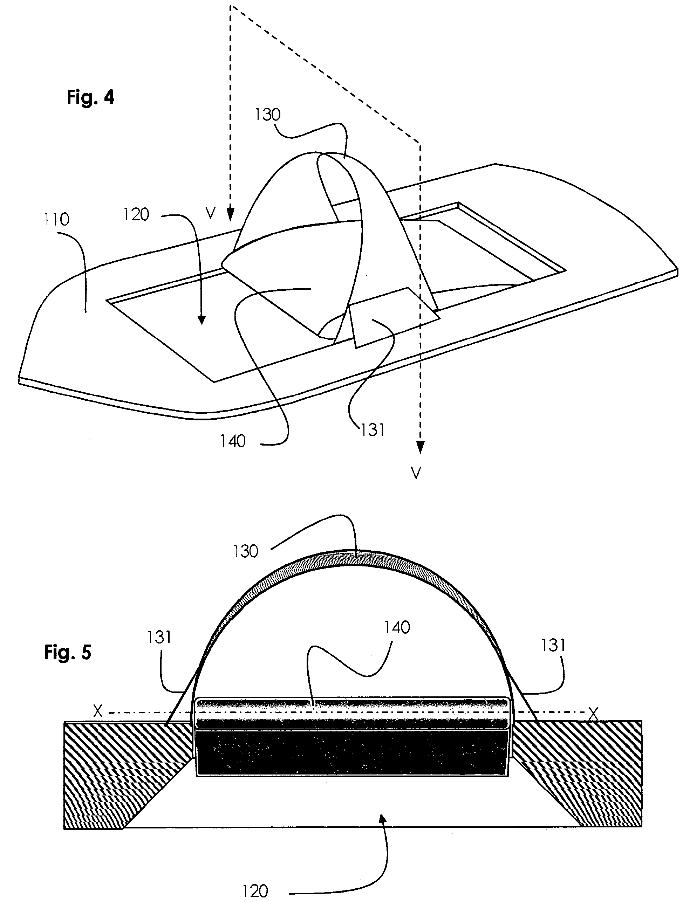

Cette zone creuse 116 est en regard de l'aile de sustentation selon l'invention (voir descriptif des figures 4 à 7) permet une accumulation d'air sous pression et une meilleure efficacité de l'aile.

Dans une première alternative de réalisation représentée sur les figures 1 à 3, les bords 112-113-114-115 du cadre délimitant l'ouverture centrale 120 de la semelle de sustentation 100 comprennent une portion verticale 112a-113a-114a-115a, prolongée par une portion biseautée 112b-113b-114b-115b, s'élargissant vers le bas du véhicule en position d'utilisation.

Dans une deuxième alternative de réalisation, la semelle de sustentation 100 définit au moins une zone confinée ZC d'accumulation d'air, conformée symétriquement à l'axe longitudinal du véhicule et délimitée par le sol S et la face inférieure 118 de la semelle 100 en regard du sol S. En outre, le véhicule comprend des moyens d'alimentation de cette zone confinée par au moins une partie du flux d'air généré par la turbine 160. Ainsi, lorsque l'air provenant de la turbine 160 s'accumule dans cette zone confinée ZC, cela provoque une augmentation de la pression d'air dans la zone confinée, ce qui améliore la sustentation de la semelle 100.

Un exemple de cette deuxième alternative de réalisation est représenté aux figures 10 et 11. Chaque partie longitudinale 117 du cadre 110 formant la semelle de sustentation 100 comprend un évidement interne longitudinal formant une conduite d'air 117a s'étendant au moins dans une portion de cette partie longitudinale 117, sur toute sa longueur pour cet exemple de réalisation.

Comme représenté sur la figure 11, chaque partie longitudinale 117 comporte en coupe d'une part la conduite d'air 117a, et d'autre part une partie pleine 117e par exemple en mousse alvéolée tel que défini précédemment.

La conduite d'air 117a de chaque partie longitudinale 117 de la semelle 100 s'étend depuis un orifice d'entrée d'air 117b (figure 10), formé dans la paroi de bord 113-114 (seul l'orifice d'entrée d'air 117b d'une partie longitudinale 117 est représenté sur la figure 10) et positionné au voisinage d'une extrémité de la partie longitudinale correspondante 117 située à l'avant du véhicule à proximité de la turbine (non visible sur la figure 10). En outre, une canalisation non représentée est prévue pour amener une partie du flux d'air généré par la turbine vers l'orifice d'entrée d'air 117b en vue de sa circulation dans la conduite d'air correspondante 117a.

Comme visible sur la figure 11, la paroi inférieure 117d de chaque conduite d'air 117a est contenue dans un plan incliné s'éloignant du sol S depuis l'intérieur de la semelle 100 en appui sur le sol S vers la partie pleine 117e également en appui sur le sol S. La zone confinée ZC est ainsi délimitée par le sol S, la paroi inférieure 117d et la partie pleine 117e. Bien entendu, toute forme de paroi inférieure 117d permettant de définir cette zone confinée d'accumulation ZC, comme par exemple une paroi inférieure 117d présentant en section transversale une forme semi-circulaire, est envisageable.

Chaque partie longitudinale 117 définit au moins une ou une pluralité de zones confinées ZC alimentées en air par un ou des trous traversants d'évacuation d'air 117c, formés dans la paroi inférieure 117d de cette conduite d'air 117a en regard du sol S et débouchant vers la ou la pluralité de zones confinées ZC.

On peut également prévoir, comme illustré sur la figure 10, que chaque partie longitudinale 117 définit une unique zone confinée ZC alimentée par un ou des trous d'évacuation d'air 117c positionné(s) vers et en regard du sol S, et régulièrement espacés en cas d'une pluralité de trous 117c.

Ainsi, lorsque les pales de la turbine 160 sont entrainées pour générer le flux d'air, une partie de ce flux d'air est introduite dans les conduites d'air 117a de la semelle 100 via les orifices d'arrivée d'air respectifs 117b, par l'intermédiaire des canalisations prévues à cet effet. La partie de flux d'air circulant dans les conduites d'air 117a est alors expulsée par les trous d'évacuation 117c vers la zone confinée d'accumulation d'air ZC, ce qui a pour effet d'augmenter la pression d'air dans cette zone d'accumulation ZC. Cela a pour avantage, au démarrage de la turbine 160 alors que cette dernière n'a pas encore atteint son plein régime, de permettre un début de sustentation et de soulever le véhicule au-dessus du sol S d'une hauteur déterminée, par exemple inférieure ou égale à trente millimètres.

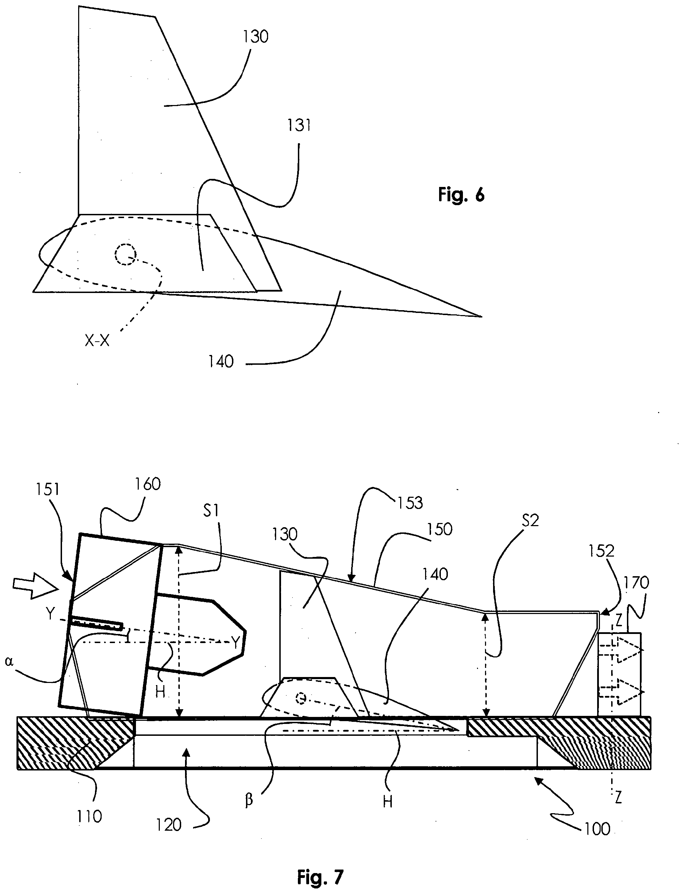

La semelle de sustentation 100 selon l'invention comprend également, comme illustré aux figures 4 à 7, un arceau 130 fixé au-dessus de l'ouverture centrale 120 de la semelle, ledit arceau supportant une aile 140 dite « de sustentation », montée pivotante sur un axe horizontal X-X et transversal par rapport à la position d'utilisation du véhicule, dans l'arceau 130 et au-dessus de l'ouverture centrale 120 de la semelle de sustentation 100. Bien entendu, tout autre type de moyen de support de l'aile 140 connu de l'homme du métier et s'appliquant à un tel véhicule est envisageable. Comme visible sur la figure 6, l'arceau 130 comprend avantageusement des renforts latéraux 131 pour le rigidifier.

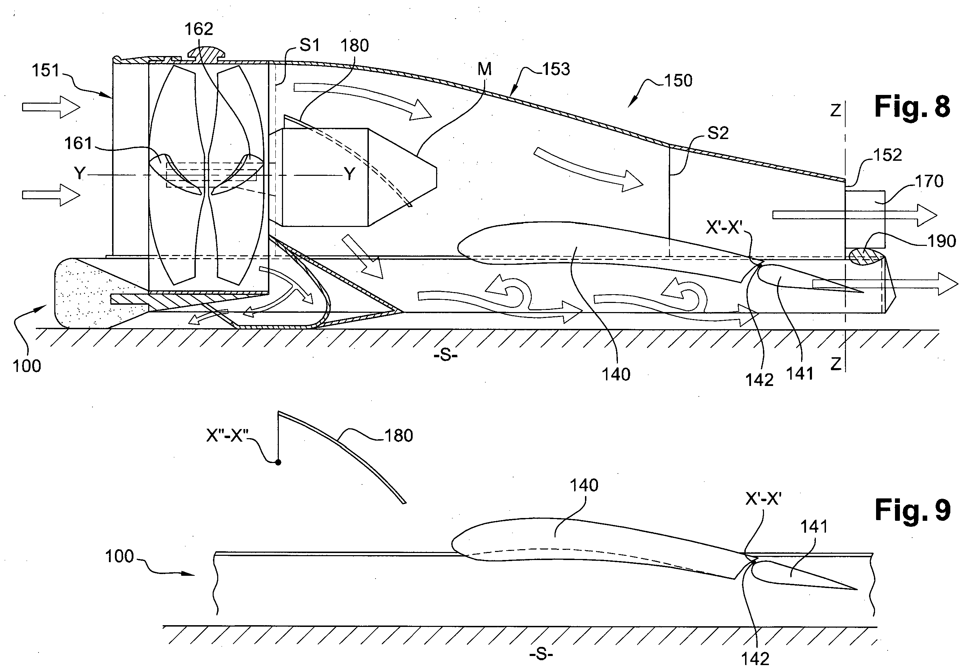

Comme illustré sur les figures 8 et 9, l'intrados de l'aile 140, c'est-à-dire sa surface concave, disposée en vis-à-vis du sol S, peut présenter une concavité plus ou moins prononcée en fonction de la portance désirée. Plus la concavité est accentuée, plus la portance est forte, ce qui a pour effet d'améliorer la sustentation.

Afin de propulser et diriger le véhicule, ce dernier comprend un fuselage 150 (figure 7) au-dessus de l'arceau 130, définissant un tunnel longitudinal au-dessus de l'ouverture centrale 120 de la semelle de sustentation 100.

Le fuselage 150 comprend, vers l'avant, une entrée d'air 151 de section S1 déterminée et munie d'au moins la turbine 160.

La turbine peut être alimentée par tout type de moteur M, comme par exemple un moteur électrique, un moteur à hydrogène ou un moteur à air comprimé.

En référence à la figure 8, la turbine peut comprendre au lieu et place de l'hélice de la figure 7 de deux hélices coaxiales contrarotatives 161, 162 entrainées par le même moteur M décrit ci-dessus. Par rapport à une hélice simple, une turbine à deux hélices contrarotatives permet, à couple transmis identique, de réduire la vitesse de rotation des pales de chaque hélice. Le rendement propulsif de la turbine 160 et la stabilité du véhicule s'en trouvent donc améliorés.

Comme visible sur les figures 7 et 8, vers l'arrière, le fuselage 150 comprend une sortie d'air 152 de section S2 inférieure à la section S1 de l'entrée. De préférence, le tunnel 150 comprend une portion centrale 153 ayant une section régulièrement décroissante depuis l'entrée vers la sortie du tunnel. Cela permet une compression de l'air, de sorte que le carénage et la turbine constituent une chambre de compression de l'air.

Le fuselage 150 est préférentiellement réalisé dans un matériau semi-rigide, flexible et qui offre très peu de résistance à l'air, afin d'éviter toute perte de charge du flux d'air traversant le tunnel défini par ce fuselage 150. En outre, ce matériau conserve ses propriétés de flexibilité et de résistance aux contraintes mécaniques dans une large plage de températures, par exemple comprises entre moins cinquante et cinquante degrés Celsius.

L'arceau 130 et l'aile 140 sont agencés entre l'entrée et la sortie du tunnel et, plus précisément, entre la turbine 160 et la sortie d'air 152.

Selon une première alternative représentée sur la figure 7, la turbine 160 présente un axe de rotation Y-Y dirigé vers l'aile de sustentation. Cela se traduit par la présence d'un angle α entre l'axe Y-Y et l'horizontale H parallèle au sol S. En outre, afin de permettre d'ajuster l'angle α, la turbine 160 peut être montée pivotante autour d'un axe transversal par rapport à la position d'utilisation du véhicule.

Selon une deuxième alternative représentée sur les figures 8 et 9, l'axe de rotation de la turbine est parallèle à l'horizontal, et la semelle de sustentation 100 comprend un déflecteur 180 disposé transversalement dans le fuselage 150, à proximité de l'entrée d'air 151 de section S1. Ce déflecteur 180 présente une surface convexe permettant de diriger l'air pulsé par la turbine 160 vers l'aile de sustentation 140.

En outre, afin d'améliorer l'orientation du flux d'air pulsé vers l'aile de sustentation 140, le déflecteur peut être monté pivotant autour d'un axe transversal X"-X" (figure 9) par rapport au sens d'utilisation du véhicule, et/ou être monté mobile en translation selon la direction verticale et/ou selon la direction horizontale H. Ceci permet d'affiner l'orientation du flux d'air vers l'aile de sustentation 140.

Une troisième alternative non représentée est une combinaison des première et deuxième alternatives. Dans cette troisième alternative, la turbine 160 présente donc un axe de rotation Y-Y qui forme un angle α avec l'horizontale H et la semelle de sustentation 100 comprend le déflecteur 180 décrit ci-dessus. Cette combinaison a un effet synergique qui permet d'affiner plus encore l'orientation du flux d'air en jouant sur les positions respectives du déflecteur 180 et de la turbine 160.

Une partie de l'air pulsé par la turbine 160 est ainsi directement dirigé vers l'aile 140, ce qui améliore l'efficacité de la sustentation.

L'aile 140 provoque un effet de sol qui donne une meilleure stabilité de la sustentation et donc du véhicule. Ce dernier est également plus maniable et plus économe en énergie, à puissance égale.

L'aile 140 peut avantageusement être équipée d'un bec de bord d'attaque et/ou aussi d'un volet 141 intérieur et/ou extérieur. Cela permet à l'aile 140 d'augmenter sa surface et de garder sa portance, à une vitesse la plus réduite possible. Les figures 8 et 9 représentent l'aile de sustentation 140 munie d'un volet d'extrémité 141 monté pivotant sur l'aile 140, par exemple par l'intermédiaire d'une charnière 142, selon un axe transversal X'-X' par rapport à la position d'utilisation du véhicule.

L'angle formé entre l'aile et le volet est réglable pour ajuster la portance de l'aile 140 : plus l'angle tend vers un angle plat, plus la portance diminue, tandis que plus la valeur de l'angle diminue, plus la portance augmente. La position du volet pivotant 141 par rapport à l'aile 140 peut être ajustée par l'intermédiaire d'un actionneur permettant de sélectionner les positions du volet pivotant 141, cet actionneur étant manuel ou automatique.

Une partie de l'air passe au-dessus de l'aile 140 et est dirigé vers la sortie 152, ce qui permet de diriger le véhicule. À cette fin, on peut prévoir au moins un élément profilé 170 formant gouverne et monté pivotant (figure 7 et 8) sur un axe vertical Z-Z par rapport à la position d'utilisation du véhicule et agencée à la sortie du tunnel 150. Par exemple, cet élément profilé peut être une seconde aile 170.

En référence aux figure 7 et 9, l'angle β formé entre l'aile 140 et l'horizontale H est important pour obtenir l'effet de sol. Il est donc important de pouvoir régler cet angle. Ainsi, l'aile 140 est montée pivotante pour permettre un ajustement de cet angle β.

Ainsi, le véhicule selon l'invention comprend un sélecteur de positions de l'aile de sustentation 140.

De préférence, ce sélecteur est automatique et programmé pour orienter l'aile de sustentation selon un angle β compris entre 12 et 16 degrés par rapport à l'horizontale, en position d'utilisation.

Selon un mode de réalisation non illustré, le véhicule comprend également, une jupe souple périphérique autour de la semelle de sustentation. Cette jupe permet de contenir l'air sous la semelle et d'améliorer encore la sustentation.

La configuration telle que décrite n'est pas limitée aux modes de réalisation décrits précédemment et représentés sur les figures. Elle n'a été donnée qu'à titre d'exemple non limitatif. De multiples modifications peuvent être apportées sans pour autant sortir du cadre de l'invention. A titre d'exemple, un dispositif de chauffage de l'air en sortie de turbine peut être prévue pour réchauffer l'air pulsé en direction de l'aile de sustentation 140, ce qui améliore la portance de l'aile 140 et diminue le risque de présence d'eau gelée sur cette dernière. La turbine 160 peut également fonctionner comme une éolienne lorsque le véhicule n'est pas utilisé et stationne en extérieur. En effet, l'énergie produite par la ou les hélices 161, 162 de la turbine 160 mise(s) en rotation par les vents peut être récupérée et stockée sous forme d'énergie électrique dans une batterie du véhicule prévue à cet effet et reliée électriquement à la turbine 160.

## Revendications

1. Véhicule à sustentation par air, comprenant une cabine et une turbine (160) d'aspiration et de distribution d'air pour assurer, en utilisation, la sustentation et l'orientation du véhicule au-dessus d'un sol (S), **caractérisé en ce qu'**il comprend, en outre, une semelle (100) dite « de sustentation », agencée sous le véhicule en position d'utilisation, la semelle de sustentation étant constituée d'un cadre périphérique (110) d'épaisseur (e) déterminée et d'une ouverture centrale (120) s'ouvrant au-dessus du sol (S), et comprenant un moyen de support (130) d'une aile (140) dite « de sustentation » montée pivotante sur un axe horizontal et transversal par rapport à la position d'utilisation du véhicule et au-dessus de l'ouverture centrale de la semelle de sustentation.

2. Véhicule selon la revendication 1, **caractérisé en ce que** le moyen de support de l'aile de sustentation (140) est un arceau (130) fixé au-dessus de l'ouverture centrale de la semelle (100), l'aile (140) étant montée dans l'arceau (130).

3. Véhicule selon la revendication 1 ou 2, **caractérisé en ce que** des bords (112-113-114-115) du cadre délimitant l'ouverture centrale de la semelle de sustentation comprennent une portion biseautée (112b-113b-114b-115b) s'élargissant vers le bas du véhicule en position d'utilisation.

4. Véhicule selon la revendication 2 ou 3, **caractérisé en ce qu'**il comprend, en outre, un fuselage (150) au-dessus de l'arceau, définissant un tunnel longitudinal au-dessus de l'ouverture centrale de la semelle de sustentation, le tunnel ayant une entrée d'air (151) de section (S1) déterminée et munie de la turbine (160), et une sortie d'air (152) de section (S2) inférieure à la section (S1) de l'entrée, l'arceau et l'aile étant agencés entre l'entrée et la sortie du tunnel.

5. Véhicule selon l'une quelconque des revendications précédentes, **caractérisé en ce que** la turbine présente un axe de rotation (Y-Y) dirigé vers l'aile de sustentation et formant un angle α avec une direction horizontale (H) et longitudinale par rapport à la position d'utilisation du véhicule.

6. Véhicule selon l'une quelconque des revendications précédentes, **caractérisé en ce que** la turbine (160) comprend deux hélices (161, 162) contrarotatives et coaxiales.

7. Véhicule selon l'une quelconque des revendications 4 à 6, **caractérisé en ce qu'**il comprend un déflecteur (180) disposé transversalement dans le fuselage (150) et présentant une surface convexe permettant de diriger l'air pulsé par la turbine (160) vers l'aile de sustentation (140).

8. Véhicule selon l'une quelconque des revendications 4 à 7, **caractérisé en ce que** le tunnel (150) comprend une portion centrale (153) ayant une section régulièrement décroissante depuis l'entrée (151) vers la sortie (152) du tunnel (150).

9. Véhicule selon l'une quelconque des revendications précédentes, **caractérisé en ce qu'**il comprend, en outre, un sélecteur automatique de positions de l'aile de sustentation (140), le sélecteur étant programmé pour orienter la dite aile (140) selon un angle compris entre 12 et 16 degrés par rapport à l'horizontale, en position d'utilisation.

10. Véhicule selon l'une quelconque des revendications précédentes, **caractérisé en ce qu'**il comprend, en outre, une jupe souple périphérique autour de la semelle de sustentation (100).

11. Véhicule selon l'une quelconque des revendications précédentes, **caractérisé en ce que** la semelle (100) définit au moins une zone confinée (ZC) d'accumulation d'air conformée symétriquement à l'axe longitudinal du véhicule et délimitée par le sol (S) et la face inférieure (118) de la semelle (100) en regard du sol (S), le véhicule comprenant des moyens d'amenée d'au moins une partie du flux d'air généré par la turbine (160) vers la ou les zones d'accumulation (ZC) de sorte que l'augmentation de la pression d'air résultant de l'accumulation d'air dans la zone correspondante améliore la sustentation de la semelle (100).

12. Véhicule selon la revendication précédente, **caractérisé en ce que** le cadre périphérique (110) formant la semelle (100) comprend deux parties longitudinales (117), chacune comprenant un évidement interne longitudinal formant une conduite d'air (117a) s'étendant :
• depuis un orifice d'entrée d'air (117b) qui est formé dans la paroi de bord (113-114) de la semelle (100) et qui est en liaison avec une canalisation d'arrivée d'air qui débouche à proximité de la turbine (160),
• jusqu'à au moins un trou d'évacuation d'air (117c) qui est formé dans la paroi inférieure (117d) en regard du sol (S) de la conduite d'air correspondante (117a) et qui débouche vers la zone confinée dédiée (ZC) qui est ménagée entre ladite paroi inférieure (118) de la semelle (100) et le sol (S).

13. Véhicule selon la revendication précédente, **caractérisé en ce que** chaque partie longitudinale (117) comprend la conduite d'air correspondante (117a) et une partie pleine (117e) adjacente à la conduite d'air (117a), et **en ce que** la face inférieure (117d) de la conduite d'air (117a) est inclinée en s'éloignant du sol (S) depuis l'intérieur du cadre (110) en appui sur le sol (S) vers la partie pleine (117e) également en appui sur le sol (S) de manière à délimiter la zone confinée (ZC) d'accumulation d'air par le sol (S), la partie pleine (117e) et la face inférieure de la conduite d'air (117a).

14. Véhicule selon la revendication 12 ou 13, **caractérisé en ce que** chaque conduite d'air (117a) définit une pluralité de zones confinées (ZC) ou une zone confinée unique (ZC).

15. Véhicule selon l'une quelconque des revendications précédentes, **caractérisé en ce que** l'aile (140) comprend un volet d'extrémité (141) monté pivotant et dont l'orientation par rapport à l'aile (140) peut être réglée par l'intermédiaire d'un actionneur afin de modifier la portance de l'aile.

## Patentansprüche

1. Fahrzeug mit Luftauftrieb, das eine Kabine und eine Turbine (160) für die Ansaugung und Verteilung von Luft aufweist, um im Betrieb den Auftrieb und die Ausrichtung des Fahrzeugs oberhalb eines Bodens (S) zu gewährleisten, **dadurch gekennzeichnet, dass** es außerdem eine so genannte "Auftriebs"-Grundplatte (100) enthält, die in der Betriebsstellung unter dem Fahrzeug angeordnet ist, wobei die Auftriebs-Grundplatte aus einem Umfangsrahmen (110) einer bestimmten Dicke (e) und einer zentralen Öffnung (120) besteht, die sich oberhalb des Bodens (S) öffnet, und eine Trageinrichtung (130) eines so genannten "Auftriebs"-Flügels (140) enthält, der schwenkbar auf eine waagrechte Achse und quer bezüglich der Betriebsstellung des Fahrzeugs und oberhalb der zentralen Öffnung der Auftriebs-Grundplatte montiert ist.

2. Fahrzeug nach Anspruch 1, **dadurch gekennzeichnet, dass** die Trageinrichtung des Auftriebsflügels (140) ein oberhalb der zentrale Öffnung der Grundplatte (100) befestigter Bügel (130) ist, wobei der Flügel (140) in den Bügel (130) montiert ist.

3. Fahrzeug nach Anspruch 1 oder 2, **dadurch gekennzeichnet, dass** Ränder (112-113-114-115) des Rahmens, die die zentrale Öffnung der Auftriebs-Grundplatte begrenzen, einen abgeschrägten Abschnitt (112b-113b-114b-115b) enthalten, der sich zur Unterseite des Fahrzeugs in Betriebsstellung verbreitert.

4. Fahrzeug nach Anspruch 2 oder 3, **dadurch gekennzeichnet, dass** es außerdem einen Rumpf (150) oberhalb des Bügels enthält, der einen Längstunnel oberhalb der zentralen Öffnung der Auftriebs-Grundplatte definiert, wobei der Tunnel einen Lufteinlass (151) mit bestimmtem Querschnitt (S1) und mit der Turbine (160) versehen und einen Luftauslass (152) mit einem Querschnitt (S2) kleiner als der Querschnitt (S1) des Einlasses hat, wobei der Bügel und der Flügel zwischen dem Einlass und dem Auslass des Tunnels angeordnet sind.

5. Fahrzeug nach einem der vorhergehenden Ansprüche, **dadurch gekennzeichnet, dass** die Turbine eine Drehachse (Y-Y) aufweist, die zum Auftriebsflügel gerichtet ist und mit einer waagrechten und bezüglich der Betriebsstellung des Fahrzeugs längs verlaufenden Richtung (H) einen Winkel α bildet.

6. Fahrzeug nach einem der vorhergehenden Ansprüche, **dadurch gekennzeichnet, dass** die Turbine (160) zwei gegendrehende und koaxiale Propeller (161, 162) enthält.

7. Fahrzeug nach einem der Ansprüche 4 bis 6, **dadurch gekennzeichnet, dass** es ein Ablenkblech (180) enthält, das quer im Rumpf (150) angeordnet ist und eine konvexe Fläche aufweist, die es ermöglicht, die von der Turbine (160) umgewälzte Luft zum Auftriebsflügel (140) zu richten.

8. Fahrzeug nach einem der Ansprüche 4 bis 7, **dadurch gekennzeichnet, dass** der Tunnel (150) einen zentralen Abschnitt (153) enthält, der einen gleichmäßig vom Einlass (151) zum Auslass (152) des Tunnels (150) abnehmenden Querschnitt hat.

9. Fahrzeug nach einem der vorhergehenden Ansprüche, **dadurch gekennzeichnet, dass** es außerdem einen automatischen Wähler von Stellungen des Auftriebsflügels (140) enthält, wobei der Wähler programmiert ist, um den Flügel (140) gemäß einem Winkel zwischen 12 und 16 Grad bezüglich der Waagrechten in der Betriebsstellung auszurichten.

10. Fahrzeug nach einem der vorhergehenden Ansprüche, **dadurch gekennzeichnet, dass** es außerdem eine biegsame Umfangsschürze um die Auftriebs-Grundplatte (100) herum enthält.

11. Fahrzeug nach einem der vorhergehenden Ansprüche, **dadurch gekennzeichnet, dass** die Grundplatte (100) mindestens eine eingeschlossene Luftansammlungszone (ZC) definiert, die symmetrisch zur Längsachse des Fahrzeugs gestaltet ist und vom Boden (S) und von der Unterseite (118) der Grundplatte (100) gegenüber dem Boden (S) begrenzt wird, wobei das Fahrzeug Zufuhreinrichtungen mindestens eines Teils des von der Turbine (160) erzeugten Luftstroms zu der oder den Sammelzone(n) (ZC) enthält, so dass die aus der Luftansammlung in der entsprechenden Zone resultierende Erhöhung des Luftdrucks den Auftrieb der Grundplatte (100) verbessert.

12. Fahrzeug nach dem vorhergehenden Anspruch, **dadurch gekennzeichnet, dass** der die Grundplatte (100) formende Umfangsrahmen (110) zwei Längsteile (117) enthält, die je eine eine Luftleitung (117a) formende innere Längsaussparung enthalten, die sich erstreckt:
• von einer Lufteinlassöffnung (117b), die in der Randwand (113-114) der Grundplatte (100) geformt ist und die mit einem Luftzufuhrkanal in Verbindung steht, der in der Nähe der Turbine (160) mündet,
• bis zu mindestens einem Luftabfuhrloch (117c), das in der unteren Wand (117d) gegenüber dem Boden (S) der entsprechenden Luftleitung (117a) geformt ist und das zur dedizierten eingeschlossenen Zone (ZC) mündet, die zwischen der unteren Wand (118) der Grundplatte (100) und dem Boden (S) vorgesehen ist.

13. Fahrzeug nach dem vorhergehenden Anspruch, **dadurch gekennzeichnet, dass** jeder Längsteil (117) die entsprechende Luftleitung (117a) und einen massiven Teil (117e) an die Luftleitung (117a) angrenzend enthält, und dass die Unterseite (117d) der Luftleitung (117a) geneigt ist, indem sie sich vom Boden (S) von der Innenseite des Rahmens (110) in Auflage auf dem Boden (S) zum massiven Teil (117e) ebenfalls in Auflage auf dem Boden (S) entfernt, um die eingeschlossene Luftansammlungszone (ZC) durch den Boden (S), den massiven Teil (117e) und die Unterseite der Luftleitung (117a) zu begrenzen.

14. Fahrzeug nach Anspruch 12 oder 13, **dadurch gekennzeichnet, dass** jede Luftleitung (117a) eine Vielzahl von eingeschlossenen Zonen (ZC) oder eine einzige eingeschlossene Zone (ZC) definiert.

15. Fahrzeug nach einem der vorhergehenden Ansprüche, **dadurch gekennzeichnet, dass** der Flügel (140) eine Endklappe (141) enthält, die schwenkbar montiert ist und deren Ausrichtung bezüglich des Flügels (140) mittels eines Stellglieds geregelt werden kann, um den Auftrieb des Flügels zu verändern.

## Claims

1. Air-levitated vehicle, comprising a cabin and an air suction and distribution turbine (160) for, in use, levitating and orientating the vehicle above a ground (S), **characterized in that** it further comprises, a so-called "levitation" base (100), arranged underneath the vehicle in the position of use, the levitation base being made up of a peripheral frame (110) of determined thickness (e) and of a central opening (120) opening above the ground (S), and comprising a support means (130) for a so-called "levitation" wing (140) mounted with the ability to pivot on an axle that is horizontal and transverse with respect to the position of use of the vehicle and above the central opening of the levitation base.

2. Vehicle according to Claim 1, **characterized in that** the means for supporting the levitation wing (140) is an arch (130) fixed over the central opening of the base (100), the wing (140) being mounted in the arch (130).

3. Vehicle according to Claim 1 or 2, **characterized in that** edges (112-113-114-115) of the frame delimiting the central opening in the levitation base comprise a chamfered portion (112b-113b-114b-115b) widening towards the bottom of the vehicle in the position of use.

4. Vehicle according to Claim 2 or 3, **characterized in that** it further comprises a fuselage (150) above the arch, defining a longitudinal tunnel over the central opening of the levitation base, the tunnel having an air inlet (151) of determined cross section (S1) and equipped with the turbine (160), and an air outlet (152) of cross section (S2) smaller than the inlet section (S1), the arch and the wing being positioned between the inlet and the outlet of the tunnel.

5. Vehicle according to any one of the preceding claims, **characterized in that** the turbine has an axis of rotation (Y-Y) directed towards the levitation wing and making an angle α with a horizontal direction (H) and which is longitudinal with respect to the position of use of the vehicle.

6. Vehicle according to any one of the preceding claims, **characterized in that** the turbine (160) comprises two contrarotating and coaxial helixes (161, 162).

7. Vehicle according to any one of Claims 4 to 6, **characterized in that** it comprises a deflector (180) positioned transversally in the fuselage (150) and having a convex surface allowing air blown by the turbine (160) to be directed toward the levitation wing (140).

8. Vehicle according to any one of Claims 4 to 7, **characterized in that** the tunnel (150) comprises a central portion (153) having a cross section that decreases uniformly from the inlet (151) towards the outlet (152) of the tunnel (150).

9. Vehicle according to any one of the preceding claims, **characterized in that** it further comprises an automatic selector of positions of the levitation wing (140), the selector being programmed to orient the said wing (140) at an angle between 12 and 16 degrees with respect to the horizontal, in the position of use.

10. Vehicle according to any one of the preceding claims, **characterized in that** it further comprises a flexible peripheral skirt around the levitation base (100) .

11. Vehicle according to any one of the preceding claims, **characterized in that** the base (100) defines at least one confined zone (ZC) in which air accumulates, and which is configured symmetrically with respect to the longitudinal axis of the vehicle and delimited by the ground (S) and the underside face (118) of the base (100) facing the ground (S), the vehicle comprising means for conveying at least part of the air flow generated by the turbine (160) towards the accumulation zone or zones (ZC) so that the increase in air pressure resulting from the accumulation of air in the corresponding zone improves the levitation of the base (100).

12. Vehicle according to the preceding claim, **characterized in that** the peripheral frame (110) forming the base (100) comprises two longitudinal parts (117) each one comprising a longitudinal internal cavity forming an air duct (117a) extending:
• from an air inlet orifice (117b) which is formed in the edge wall (113-114) of the base (100) and which is in communication with an air intake passage that opens in the vicinity of the turbine (160),
• up to at least one air discharge hole (117c) which is formed in the underside wall (117d) facing the ground (S) of the corresponding air duct (117a) and which opens towards the dedicated confined zone (ZC) which is formed between the said underside wall (118) of the base (100) and the ground (S).

13. Vehicle according to the preceding claim, **characterized in that** each longitudinal part (117) comprises the corresponding air duct (117a) and a solid part (117e) adjacent to the air duct (117a), and **in that** the underside face (117d) of the air duct (117a) is angled away from the ground (S) starting the inside of the frame (110) resting on the ground (S) and towards the solid part (117e) also resting on the ground (S), so that the air-accumulation confined zone (ZC) is delimited by the ground (S), the solid part (117e) and the underside face of the air duct (117a).

14. Vehicle according to Claim 12 or 13, **characterized in that** each air duct (117a) defines a plurality of confined zones (ZC) or one single confined zone (ZC).

15. Vehicle according to any one of the preceding claims, **characterized in that** the wing (140) comprises an end flap (141) mounted with the ability to pivot and of which the orientation with respect to the wing (140) can be regulated by an actuator in order to alter the lift of the wing.
